# EUROPÄISCHE PATENTANMELDUNG

(11) **EP 1 415 889 A2**
(43) Veröffentlichungstag der Anmeldung: **06.05.2004**
(21) Anmeldenummer: 03021115.5
(22) Anmeldetag: 19.09.2003
(51) Int. Cl.: B62D 1/19

(54) **Lenksäule für ein Kraftfahrzeug**

(30) Priorität: 17.10.2002 DE 10248439
(71) Anmelder: DaimlerChrysler AG, 70567 Stuttgart (DE)
(72) Erfinder: Krimm, Erik, 22549 Hamburg (DE); Maak, Jan, 21217 Seevetal (DE)

(57) **Zusammenfassung**

Die Erfindung betrifft eine Lenksäule (1) für ein Kraftfahrzeug mit einem axial verschiebbar gelagerten Mantelrohr (3), in welchem eine Lenkwelle (2) drehbar gelagert ist. Das Mantelrohr (3) weist Führungsnuten (6', 6") zur Aufnahme von Führungselementen (4', 4") auf. Der Erfindung liegt die Aufgabe zugrunde, eine Lenksäule (1) zu schaffen, die einen Beitrag zur Insassensicherheit leistet und gleichzeitig einfach herzustellen ist. Dazu wird vorgeschlagen, in einer Führungsnut (6') einen einstückig mit dem Mantelrohr (3) ausgeführten Steg (8) vorzusehen.

## Beschreibung

Die Erfindung betrifft eine Lenksäule für ein Kraftfahrzeug gemäß dem Oberbegriff des Patentanspruchs 1.

Axial verschiebbare Systeme für Lenksäulen sind in verschiedensten Varianten bekannt. Sie dienen dazu, bei einem Unfall und einem dadurch hervorgerufenen Aufprall eines Fahrzeuginsassens auf das Lenkrad nachzugeben und dabei Aufprallenergie zu absorbieren. Ihr Wirkprinzip beruht darauf, dass ein auf eine vorbestimmte axiale Belastung der Lenksäule ausgelegtes Sicherungsglied bei einer Überschreitung der vorgegebenen Belastung beispielsweise im Falle eines Unfalls freigibt, so dass die über das Sicherungsglied miteinander verbundenen Bauteile gegeneinander verschoben werden können. Axial verschiebbar können dabei sowohl Lenkwellen als auch Mantelrohre ausgebildet sein.

So ist beispielsweise aus der DE 40 30 405 C2 eine Sicherheitslenksäule mit einem Mantelrohr und einer darin drehbar gelagerten Lenkwelle bekannt. Das Mantelrohr ist mehrteilig ausgeführt, wobei die einzelnen Teile des Mantelrohres relativ zueinander verschiebbar gelagert sind. Weiterhin sind die Mantelrohrteile über abscherbare Kunststoffstifte miteinander verbunden, die die Haltekraft zwischen den beiden Mantelrohrteilen in axialer Richtung erhöhen. Sobald die bei einem Unfall auf die Lenksäule wirkenden Kräfte ein vorbestimmtes Kraftniveau überschreiten, versagen die Kunststoffstifte und gegeben eine Bewegung zwischen den beiden Mantelrohrteilen frei, wodurch eine axiale Verschiebung zumindest eines Mantelrohrteils ermöglicht wird.

An dieser bekannten Anordnung ist nachteilig, dass die Montage der Lenksäule durch das Einbringen der abscherbaren Kunststoffstifte sehr aufwendig ist. Dazu müssen nämlich zunächst die beiden Mantelrohrteile so zueinander ausgerichtet werden, dass deren Aufnahmen für die Kunststoffstifte in Überdeckung gebracht sind. In dieser Position müssen die Mantelrohrteile zumindest für die Montage fixiert und anschließend die Kunststoffstifte eingebracht und eventuell auch fixiert werden. Somit sind allein für das Montieren der Kunststoffstifte mehrere Arbeitsschritte notwendig.

Aus der GB 2 365 826 A ist eine Lenksäule für ein Kraftfahrzeug mit einem axial verschiebbar gelagerten Mantelrohr zur Aufnahme einer drehbar in dem Mantelrohr gelagerten Lenkwelle bekannt. Das Mantelrohr weist Langlochausnehmungen zur Aufnahme von Führungselementen auf. Die Langlochausnehmungen sind in Blech gestanzte Ausnehmungen und weisen einen Steg auf. Der vorliegenden Erfindung liegt die Aufgabe zugrunde, eine Lenksäule für ein Kraftfahrzeug mit einem axial verschiebbar gelagerten Mantelrohr zu schaffen, die einen Beitrag zur Insassensicherheit leistet und gleichzeitig einfach herzustellen ist.

Diese Aufgabe wird durch eine Lenksäule für ein Kraftfahrzeug mit den Merkmalen des Patentanspruchs 1 gelöst.

Demnach zeichnet sich die Erfindung dadurch aus, das bei einem verschiebbar gelagerten Mantelrohr mit Führungsnuten zur Aufnahme von Führungselementen in mindestens einer Führungsnut ein Steg vorgesehen ist, der einstückig mit dem Mantelrohr ausgebildet ist. Der Steg wirkt mit den Führungselementen insofern zusammen, dass er als Anschlag für eine axiale Verschiebung des Mantelrohres relativ zu den Führungselementen dient. Der Steg verhindert somit ein axiales Verschieben des Mantelrohres relativ zu den Führungselementen solange eine auf das Mantelrohr einwirkende Kraft ein vorbestimmtes Kraftniveau nicht überschreitet. Der Steg ist so ausgelegt, dass er bei Überschreiten dieser vorbestimmten Kraft abschert und dadurch die axiale Bewegung des Mantelrohres relativ zu den Führungselementen freigibt. Wenn im Zusammenhang mit der vorliegenden Erfindung von Mantelrohr die Rede ist, so ist damit sowohl ein komplettes Mantelrohr gemeint als auch bei mehrteiligen Mantelrohren ein Teil davon.

Die einstückige Ausführung des Stegs mit dem Mantelrohr bringt erhebliche Vorteile mit sich. So erleichtert sich die Montage, weil der Steg im Gegensatz zu den aus dem Stand der Technik bekannten Kunststoffstiften nicht, montiert werden muss sondern bereits mit dem Mantelrohr verbunden ist. Das bringt zudem den Vorteil mit sich, dass der Steg immer an der selben Stelle angeordnet ist, wodurch ein hoher Grad an Reproduzierbarkeit und somit an gleichbleibender Qualität sichergestellt ist. Weiterhin ist sichergestellt, dass der Steg bei der Montage nicht vergessen werden kann. Dadurch erhöht sich die Serienmontagesicherheit und es kann auf eine Endkontrolle, wie sie bei den bekannten Kunststoffstiften notwendig ist, verzichtet werden.

Gemäß einer Ausführungsform ist der Steg in der Nut senkrecht zur Verschieberichtung des Mantelrohres ausgerichtet. Dadurch wirken die Führungselemente definiert mit dem Steg zusammen, so dass sich das Versagensverhalten bzw. das Abscheren des Stegs im Falle eines Einwirkens der Führungselemente aufgrund eines Unfalls auf den Steg relativ genau vorhersagen lässt.

Die Dimensionen des Stegs, d.h. die Dicke sowie die Höhe werden in Abhängigkeit von einer vorbestimmten Kraft ausgelegt. Es handelt sich dabei um die auf die Lenksäule einwirkende Kraft, ab der eine Verschiebung des Mantelrohres in axiale Richtung erfolgen soll. Diese Kraft wird Crashkraft genannt.

Der Steg kann in mehreren Führungsnuten vorgesehen sein, wodurch sich eine auf das Lenkrad einwirkende Kraft auf mehrere Stege verteilt. Es ist auch denkbar mehrere Stege in einer Führungsnut vorzusehen. Ebenso können in mehreren Nuten mehrere Stege angeordnet sein.

Gemäß einer weiteren Ausführungsform bestehen Mantelrohr und Steg aus Druckguss. Dieses Material bringt den Vorteil mit sich, dass es im Vergleich zu Kunststoffstiften mehr Kraft aufnehmen kann. Somit kann mittels eines Stegs eine höhere Haltekraft in axialer Richtung eingestellt werden. Weiterhin ist das Crashverhalten besser vorherzubestimmen, weil Druckguss beim Versagensablauf eine relativ geringe Streuung aufweist. Zudem bedeutete es für die Herstellung keinen erhöhten Aufwand, weil lediglich die Druckgussform für das Mantelrohr angepasst werden muss.

Im folgenden wird die Erfindung anhand des in den Zeichnungen dargestellten Ausführungsbeispiels näher erläutert. Dabei zeigen:
- Fig. 1: eine perspektivische Ansicht einer erfindungsgemäßen Lenksäule mit Führungsschienen;
- Fig. 2: eine perspektivische Ansicht eines Mantelrohres einer erfindungsgemäßen Lenksäule sowie
- Fig. 3: eine Schnittdarstellung eines Mantelrohres entlang der Linie III-III gemäß Fig. 2.

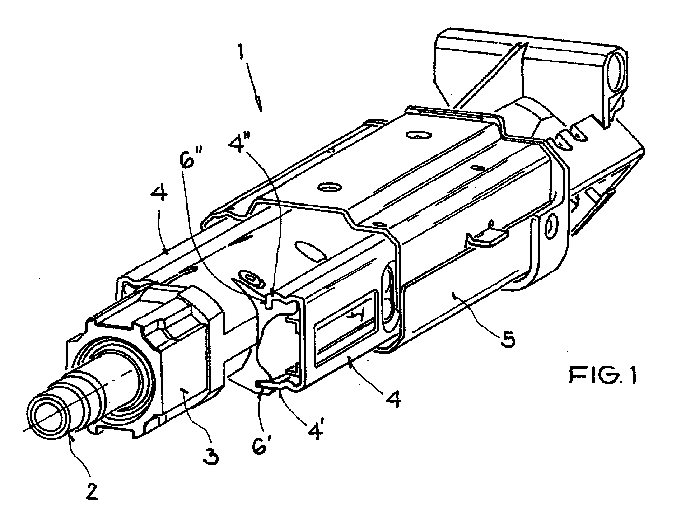

In Fig. 1 ist eine Lenksäule 1 in perspektivischer Ansicht dargestellt. Die Lenksäule 1 weist eine Lenkwelle 2 auf. Die Lenkwelle 2 ist in einem Mantelrohr 3 drehbar gelagert. Zur Erhöhung der Insassensicherheit ist die Lenkwelle 1 teleskopierbar ausgeführt. Dies ist in Fig. 1 nicht erkennbar. Dadurch kann die Lenksäule 1 bei einem Unfall und einem dadurch hervorgerufenen Aufprall eines Fahrzeuginsassens auf die Lenksäule 1 ineinander geschoben werden. Um den für das Ineinanderschieben der Lenksäule 1 notwendigen Weg zur Verfügung zu stellen, ist das Mantelrohr 3 in Schienen 4 verschiebbar gelagert. Die Schienen 4 sind in einem kastenförmigen Halter 5 angeordnet, der an der Fahrzeugkarosserie festgelegt ist. Die Schienen 4 haben einen im wesentlichen u-förmigen Querschnitt und sind mit ihrem offenen Ende auf das Mantelrohr 3 ausgerichtet.

In das Mantelrohr 3 sind Führungsnuten 6' und 6" eingebracht, die mit Führungsenden 4' und 4" der Schienen 4 zusammenwirken. In dem dargestellten Ausführungsbeispiel weisen die Führungsenden 4' und 4" in unterschiedliche Richtungen. Sie sind senkrecht zueinander ausgerichtet. Die Schienen 4 dienen dazu eine axiale Verschieberichtung für das Mantelrohr 3 vorzugeben. Um das Mantelrohr 3 in den Schienen 4 zu fixieren, wird zwischen den Führungsnuten 6' bzw. 6" und den Führungsenden 4' bzw. 4" der Schienen 4 ein Kunststoff eingebracht.

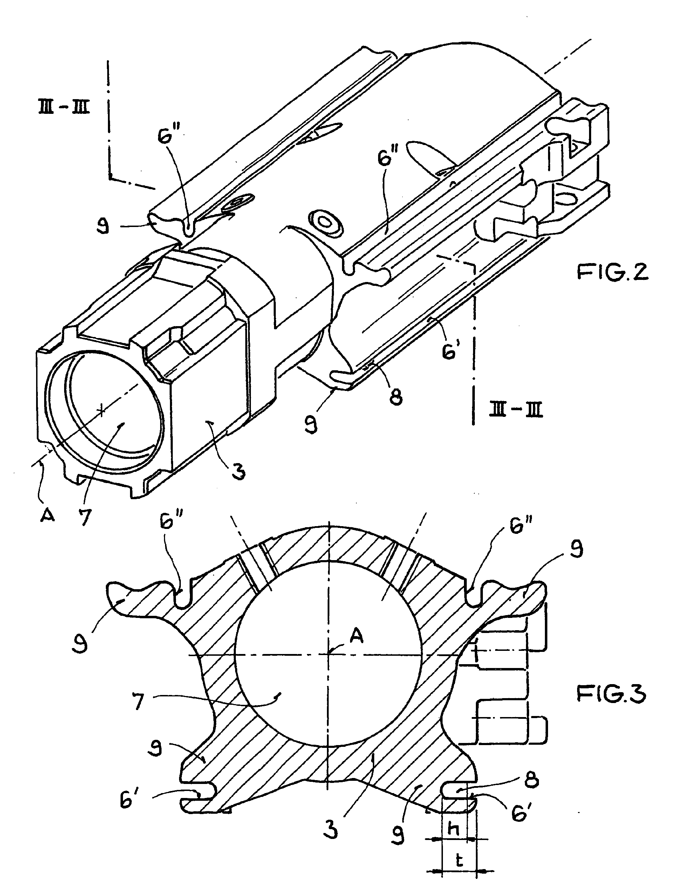

In Fig. 2 ist das Mantelrohr 3 in perspektivischer Ansicht dargestellt . Es weist eine Bohrung 7 zur Aufnahme der Lenkwelle 2 auf. Weiterhin sind die Führungsnuten 6' und 6" zu erkennen. Diese erstrecken sich parallel zu der Längsachse A des Mantelrohres 3. Die Führungsnuten 6' und 6" weisen ebenso wie die Führungsenden 4' und 4" in unterschiedliche Richtungen. Sie sind ebenfalls senkrecht zueinander ausgerichtet, wobei die Führungsnuten 6' im eingebauten Zustand des Mantelrohres 3 zu den Seiten und die Führungsnuten 6" nach oben weisen. Die Führungsnuten 6' und 6" erstrecken sich über einen wesentlichen Teil der Länge des Mantelrohres 3.

In die Führungsnut 6' ist ein Steg 8 eingebracht. Der Steg 8 ist beabstandet vom Ende 9 der Führungsnut 6' angeordnet. Besser erkennbar ist der Steg 8 in Fig. 3, in der ein Querschnitt entlang der Linie III-III in Fig. 2 durch das Mantelrohr 3 mit der Bohrung 7 dargestellt ist. Das Mantelrohr 3 hat einen im wesentlichen runden Querschnitt mit vier Fortsätzen 9, in die jeweils die Führungsnuten 6' bzw. 6" eingebracht sind. In eine der beiden Nuten 6' ist der Steg 8 eingebracht. Dieser erstreckt sich über eine Höhe h, die geringer ist als die Tiefe t der Nut 6'. Die Höhe h und die Dicke des Stegs 8, d.h. die Erstreckung des Stegs 8 in axiale Richtung des Mantelrohres 3, werden in Abhängigkeit von einer vorbestimmten Crashkraft ausgelegt.

Das Führungsende 4' der Schiene 4, welches der dem Steg 8 aufweisenden Nut 6' zugeordnet ist, weist eine in den Figuren nicht dargestellte, den Steg 8 aufnehmende Ausnehmung auf, so dass der Steg 8 nach der Montage der Lenksäule von beiden Seiten von der Schiene 4 umgeben ist. Aus diesem Grund ist der Steg 8 in Fig. 1 nicht erkennbar. Er wird von der Schiene 4 verdeckt.

Im folgenden wird die Wirkungsweise der erfindungsgemäßen Anordnung beschrieben. Durch den in der Führungsnut 6' angeordneten Steg 8 ist die axiale Verschiebbarkeit des Mantelrohres 3 gegenüber den Schienen 4 zunächst beschränkt. Eine Verschiebung des Mantelrohrs 3 relativ zu den Schienen 4 ist nicht möglich. Der Steg 8 setzt der Schienen 4 eine axiale Haltekraft entgegen. Wird auf die Lenksäule 1 eine Kraft aufgebracht, die einen gewissen Wert, nämlich die vorbestimmte Crashkraft übersteigt, versagt der Steg, d.h. er schert ab und gibt den Weg für eine Verschiebung des Mantelrohres 3 relativ zu den Schienen 4 frei. In dem dargestellten Ausführungsbeispiel kann das Mantelrohr 3 nach Abscheren des Steges ca. 90 mm in axiale Richtung verschoben werden. Bei diesem Verschieben kann über bekannte Energieabsorbtionselemente, wie beispielsweise Blechlaschen, die aufgrund der Relativbewegung zwischen zwei Teilen verformt werden, Energie absorbiert werden.

## Patentansprüche

1. Lenksäule für ein Kraftfahrzeug mit
einem axial verschiebbar gelagerten Mantelrohr zur Aufnahme einer drehbar in dem Mantelrohr gelagerten Lenkwelle,
wobei das Mantelrohr Aufnahmeelement zur Aufnahme von Führungselementen aufweist,
**dadurch gekennzeichnet,**
**dass** es sich bei den Aufnahmeelementen um Führungsnuten (6', 6") handelt, wobei in mindestens einer Führungsnut (6') ein einstückig mit dem Mantelrohr (3) ausgeführter Steg (8) vorgesehen ist, und wobei das Mantelrohr (3) und der Steg (8) aus Druckguss bestehen.

2. Lenksäule nach Anspruch 1,
**dadurch gekennzeichnet,**
**dass** der Steg (8) in der Nut (6') senkrecht zur Verschieberichtung des Mantelrohres (3) angeordnet ist.

3. Lenksäule nach Anspruch 1 oder 2,
**dadurch gekennzeichnet,**
**dass** die Dimensionen des Stegs (8) in Abhängigkeit von einer vorbestimmten Kraft ausgelegt sind.

4. Lenksäule nach einem der vorhergehenden Ansprüche,
**dadurch gekennzeichnet,**
**dass** der Steg (8) in mehreren Führungsnuten (6', 6") vorgesehen ist.
